# EUROPÄISCHE PATENTSCHRIFT

(11) **EP 2 078 608 B1**
(45) Veröffentlichungstag und Bekanntmachung des Hinweises auf die Patenterteilung: **22.07.2015**
(21) Anmeldenummer: 08172071.6
(22) Anmeldetag: 18.12.2008
(51) Int. Cl.: B32B 27/32, C09J 7/02, B32B 27/36

(54) **Liner mit einer Barriereschicht**
Liner with a barrier layer
Revêtement doté d'une couche barrière

(30) Priorität: 09.01.2008 DE 102008003546
(43) Veröffentlichungstag der Anmeldung: 15.07.2009
(73) Patentinhaber: TESA SE, 20253 Hamburg (DE)
(72) Erfinder: Himmelsbach, Peter, 21614, Buxtehude (DE)

(56) Entgegenhaltungen:
- EP-A- 1 255 252
- WO-A-03/013976
- DE-A1- 19 623 751
- DE-A1-102004 062 770
- DE-C1- 19 952 089

## Beschreibung

Die Erfindung beschreibt die Verwendung eines Liners mit einer Barriereschicht, die eine Barrierewirkung gegen Sauerstoff und Wasserdampf sowie gegen andere Schadgase aufweist, zum Schutz von Klebemassen.

Für Spezialverklebungen sind Klebemassen mit besonderen Eigenschaften gefragt. Fallweise weisen diese Klebemassen reaktive oder funktionelle Gruppen auf, welche erst nach Aufbringung der Klebemasse auf einem Untergrund in einem weiteren Prozessschritt reagieren sollen.

Der Einsatz solcher Klebemassen ist nicht ganz unproblematisch, da die Mischung von solchen Systemen viel Erfahrung bedarf, die Losgrößen relativ gering sind und fallweise eine Vielzahl an Varianten gefragt werden. Eine längerfristige Bereitstellung ist durch das Einwirken von reaktiven Substanzen aus der Umgebung häufig nicht möglich, ferner sind lange Transportwege über eine größere Zeitspanne oder Lagerhaltung zur Kumulierung von Losmengen und so zur besseren betriebwirtschaftlichen Auslastung von Anlagen und Wissen nicht möglich, weil die Klebemassen vor Anwendung bereits reagieren.

Mit der DE 299 17 320 U ist Klebeband bekannt geworden, das diffusionsdicht ist, eine hohe Weiterreißfestigkeit aufweist und den Anforderungen des Brandschutzes entspricht. Dies wird erreicht, indem das Trägermaterial aus einem Aluminium-Polyester-Verbundmaterial besteht. Dabei ist durch die Aluminiumfolie eine Wasserdampfdiffusionssperre gegeben und die Polyesterfolie garantiert eine verbesserte Weiterreißfestigkeit, so dass das Klebeband unter Zugspannung verklebt werden kann.

Eine Verwendung eines reaktiven Systems ist nicht beschrieben, ferner ist die diffusionsdichte Schicht nicht abhäsiv ausgerüstet.

US 5,700,571 A1 beschreibt ein Trennmaterial mit mehreren Schichten, wobei eine Trennwirkung durch polyolefinische Bestandteile hervorgerufen wird. Eine Barriereschicht wird nicht beschrieben.

US 2003/087038 A1 offenbart ein Herstellungsprozess von abhäsiven Materialien mit mehreren Schichten. Eine Barriereschicht wird nicht beschrieben.

US 5,954,907 A1 beschreibt ein Beschichtungsverfahren für Trennmaterialien, wobei das Tennmaterial elektrostatisch aufgesprüht wird.

In US 5,165,976 A1 werden ein besonderes Trennmittel und die Beschichtung beschrieben. Hierbei handelt es sich um die Herstellung aus einer Emulsion.

Des Weiteren zählen aluminisierte Polyesterfilme, die einseitig klebend ausgerüstet sind, zum Stand der Technik. Derartige Bänder werden beispielsweise zur Ansatzverklebung oder Endloskleben von kunststoffbeschichteten Tapeten eingesetzt.

Die US 6,413,645 A beschreibt einen eine Sperrschicht beinhaltenden Aufbau, wobei die Sperrschicht insbesondere aus Metalloxiden oder Metallnitriden besteht. Aufgedampfte Aluminiumschichten, die eine Sperrwirkung gegen Luft oder Wasserdampf erzielen, sind insbesondere auf dem Verpackungssektor verbreitet. Beispielsweise sei die DE 196 23 751 A genannt.

Der Erfindung liegt die Aufgabe zugrunde, einen Liner zur Verfügung zu stellen, der einen einfach zu handhabenden, leichten und möglichst nicht zu dicken Schutz für insbesondere in Flächenform vorliegende Klebemassen darstellt, besonders Klebemassen mit reaktiven funktionellen Gruppen, ganz besonders Klebemassen mit Acryinitril-Gruppen oder freien Isocyanat-Gruppen.

Gelöst wird diese Aufgabe durch die Verwendung eines Liners, wie er im Hauptanspruch niedergelegt ist. Gegenstand der Unteransprüche sind dabei vorteilhafte Weiterbildungen des Liners-sowie ein Verfahren zum Aufbringen einer Klebemasse.

Demgemäß betrifft die Erfindung die Verwendung eines Liners zum Schutz von empfindlichen Klebemassen aus einem Träger aus einer Folienschicht, die von zumindest einer Kunststofffolie aus insbesondere Polyester gebildet wird, sowie einer auf der Folienschicht aufgebrachten Barriereschicht, die eine Barrierewirkung gegen Sauerstoff und Wasserdampf sowie gegen andere Schadgase aufweist und die aus einer zumindest einer Kunststofffolie gebildet wird, gewählt aus der Gruppe PUR, PP, PET, PVC, PVDC, PEN (Polyethylen-2,6-naphthalat), PAN (Polyacrylnitrile), EVOH (Ethylen-Vinyl-Alkohol-Copolymere), PA, PA6 (Poly(ε-caprolactam)e) oder insbesondere PA mit Nanokomposits.

Bei PA mit Nanokomposits handelt es sich um ein mit Schichtsilicat gefülltes PA. Diese Teilchen haben eine plättchenförmige Struktur ähnlich wie Talkum. Im Gegensatz zu Talkum ist die Teilchengröße erheblich kleiner (Nanometerbereich). Diese Teilchen werden bei der Extrusion ausgerichtet und bilden eine Schichtstruktur. Die Teilchen selbst sind wie Glas völlig undurchlässig für Gase. Die Gase werden beim Durchdringen der Folie behindert, wodurch die verbesserte Barrierewirkung entsteht. Die Schichtstruktur bildet eine Art Labyrinth, welches die Gase und Aromen passieren müssen. Aufgrund der geringen Teilchengröße sind die optischen Eigenschaften der Folie nicht beeinträchtigt.

Als Kunststofffolie werden bevorzugt Polyester und Polypropylen eingesetzt.

Der Vorteil an Polyester besteht darin, dass eine Folie aus Polyester gute Barriereeigenschaften aufweist. Des Weiteren sorgt die Folie für eine Temperaturstabilität, zuzüglich einer erhöhten mechanischen Stabilität.

Weiter vorzugsweise weist die Barriereschicht eine Dicke auf von 5 bis 160 µm.

Die Durchlässigkeit der Barriereschicht ist dabei auf folgende Werte beschränkt.
- Durchlässigkeit von O₂ < 0,1 g/m²/24h, insbesondere < 0,01 g/m²/24h, ganz insbesondere < 0,005 g/m²/24h
   (gemessen bei 23°C und 50% relativer Feuchte)
- Durchlässigkeit von H₂O < 0,1 g/m²/24h, insbesondere < 0,01 g/m²/24h, ganz insbesondere < 0,005 g/m²/24h
   (gemessen bei 37,8°C und 90% relativer Feuchte)

Gemäß einer weiteren vorteilhaften Ausführungsform der Erfindung ist die Oberfläche der Barriereschicht, die der Klebemasse zugewandt ist, mit einer abhäsiven Beschichtung ausgerüstet, bevorzugt basierend auf Silikon oder Fluor.

In einer weiteren vorteilhaften Ausführungsform der Erfindung ist die Oberfläche der freien Seite der Folienschicht ebenfalls mit einer abhäsiven Beschichtung ausgerüstet, bevorzugt basierend auf Silikon oder Fluor.

Die beiden bevorzugten Beschichtungen können gleich oder unterschiedlich aufgebaut werden.
In einer Ausführungsform ist die Oberfläche der freien Seite der Folienschicht mit einem Auftrag von 18 g/m² ausgerüstet, die Oberfläche der Barriereschicht, die der Klebemasse zugewandt ist, weist 35 g/m² auf. Die beiden Beschichtungen weisen die gleiche Zusammensetzung auf.
Hierdurch können unterschiedliche Eigenschaften je nach der Verwendung der Erfindung erzielt werden. Beispielsweise werden durch unterschiedliche Masseaufträge der abhäsiven Beschichtung unterschiedliche Trennkräfte zur Klebemasse erzielt.

In einer andern Ausführungsform werden die beiden Oberflächen mit abhäsiven Systemen mit unterschiedlicher Zusammensetzung ausgerüstet. Auch hierdurch wird eine unterschiedliche Trennwirkung erzielt.

Vorzugsweise werden für die Beschichtungen abhäsive Systeme verwendet, welche einen hohen Vernetzungsgrad aufweisen. In einer bevorzugten Ausführung basieren die abhäsiven Schichten auf silikonhaltigen oder fluorhaltigen System.
Die Systeme sind so eingestellt, dass eine Diffusion von abhäsiven Substanzen in die Klebemasse quasi ausbleibt. Analytisch lassen sich gegebenenfalls noch Substanzen aus der abhäsiven Beschichtung nachweisen, welche jedoch aufgrund von mechanischem Abrieb zurückzuführen sind.
In einer bevorzugten Ausführungsform weisen die Substanzen der abhäsiven Beschichtungen quasi keinen Dampfdruck bei Raumtemperatur auf.

Silikonhaltige Systeme lassen sich bei Dow Corning, Wacker oder Rohm&Haas käuflich erwerben.
Beispielhaft sei "Dehesive® 914", ein Vinylpolydimethylsiloxan, mit dem Vernetzer Crosslinker V24, ein Methylhydrogenpolysiloxan, und mit dem Katalysator Catalyst OI, ein Platin-Katalysator in Polydimethylsiloxan, genannt. Dieses System ist bei der Wacker-Chemie GmbH erwerbbar.
Verwendbar ist des Weiteren zum Beispiel das auf dem Markt erhältliche additionsvernetzende Silikon-Release-System "Dehesive® 940A" der Wacker-Chemie mit einem zugehörigen Katalysatorsystem, das im unvernetzten Zustand aufgetragen wird und dann nachträglich im aufgetragenen Zustand vernetzt.

Als vernetzbares Silikon können die üblicherweise zur Trennbeschichtung verwendeten Silikonsysteme eingesetzt werden. Dazu zählen Mischungen aus Vernetzungskatalysatoren und so genannten thermisch härtbaren kondensations- oder additionsvernetzende Siloxanen. Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierte Siloxane verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Weiterhin sind verschiedene Arten von Organopolysiloxanmassen bekannt, die durch Erhitzen oder Bestrahlen vernetzen. Genannt seien Massen, wie sie zum Beispiel in der EP 0 378 420 A1 beschrieben werden, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungskatalysators.
Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte Kohlenwasserstoffreste direkt an den Siliciumatomen gebunden aufweisen und in Gegenwart eines Photosensibilisators vernetzt werden (siehe EP 0 168 713 B1, DE 38 20 294 C1).

Ebenfalls verwendbar sind Massen, bei denen die Vernetzungsreaktion zwischen Organopolysiloxanen, die mit Mercaptogruppen substituierte Kohlenwasserstoff direkt an den Siliciumatomen gebunden aufweisen, und Organopolysiloxanen mit direkt an die Siliciumatome gebundenen Vinylgruppen in Gegenwart eines Photosensibilisator hervorgerufen wird. Solche Massen werden beispielsweise in der US 4,725,630 A1 beschrieben.
Beim Einsatz der zum Beispiel in der DE 33 16 166 C1 beschriebenen Organopolysiloxanmassen, die mit Epoxygruppen substituierte Kohlenwasserstoffreste direkt an den Siliciumatomen gebunden aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Thermisch härtende Trennbeschichtungen sind häufig Mehrkomponentensysteme, welche typischerweise aus folgenden Komponenten bestehen:
a) Einem linearen oder verzweigten Dimethylpolysiloxan, welches aus ca. 80 bis 200 Dimethylpolysiloxan-Einheiten besteht und an den Kettenenden mit Vinyldimethylsiloxy-Einheiten abgestoppt ist. Typische Vertreter sind zum Beispiel lösungsmittelfreies, additionsvernetzendes Silikonöl mit endständigen Vinylgruppen, wie Dehesive® 921 oder 610, beide kommerziell erhältlich bei Wacker-Chemie GmbH.
b) Einem linearen oder verzweigten Vernetzer, welcher üblicherweise aus Methylhydrogensiloxy- und Dimethylsiloxy-Einheiten zusammengesetzt ist, wobei die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei Wacker-Chemie GmbH kommerziell erhältlich sind.
c) Einem Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei Wacker-Chemie GmbH.
d) Einem silikonlöslichen Platinkatalysator wie zum Beispiel einem Platindivinyltetramethyldisiloxan-Komplex, welcher üblicherweise als Karstedt-Komplex bezeichnet wird und beispielsweise unter der Bezeichnung Katalysator OL bei Wacker-Chemie GmbH kommerziell erhältlich ist.

Bei den verwendeten Silikonen, vorzugsweise Silikonölen, handelt es sich um polydisperse Gemische unterschiedlich langer und unterschiedlich substituierter, linearer oder cyclischer Siloxanketten. Die Gemische entstehen in katalysierten Syntheseprozessen. Die Polysiloxane bestehen aus alternierenden Atomen von Silicium und Sauerstoff, so dass das charakteristische Merkmal die Si-O-Si-(= Siloxan-) Bindung im Molekülverband ist. An den beiden freibleibenden Valenzen des Siliciums sind verschiedene Substituenten möglich.
Chemisch korrekt bezeichnet sind die behandelten Silikonöle also Polydimethylsiloxane, die im Allgemeinen als PDMS abgekürzt werden. Sie werden durch nachstehende Formel charakterisiert:
Struktur von linearen (links) und cyclischen Polydimethylsiloxanen (rechts) 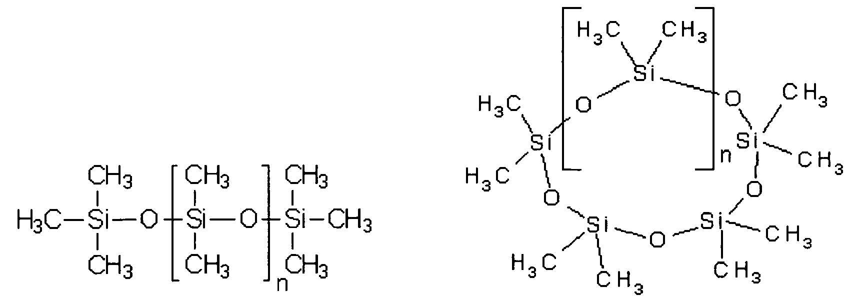 Die Reste am Silicium können auch mit weiteren Siloxanbindungen abgesättigt sein; auf diese Weise kommt man zu verzweigten und vernetzten Silikonen. Erstere bilden dann die Silikonharze, letztere die Silikonelastomere.
Je nach Funktionalität der Siliciumgruppe (mono-, di-, tri- oder tetrafunktionell) hat man die symbolischen Schreibweisen M, D, T und Q eingeführt:
- [M] = R₃SiO_{1/2}
- [D] = R₂SiO_{2/2}
- [T] = RSiO_{3/2}
- [Q] = SiO_{4/2}
Man kann die folgenden Gruppen unterscheiden:
- lineare Polysiloxane: sind kettenförmig aus difunktionellen Siloxaneinheiten aufgebaut und enthalten monofunktionelle Endgruppen; Bautyp [MDₙM] od. R₃SiO[R₂SiO]ₙ SiR₃,
   im Formelbild (R=CH₃).
- verzweigte Polysiloxane: sind ring- oder kettenförmig aus di-, tri- oder tetrafunktionellen Siloxan-Einheiten aufgebaut; Bautyp [MₙDₘT_{n]}.
- cyclische Polysiloxane: sind ringförmig aus difunktionellen Siloxan-Einheiten aufgebaut; Bautyp [Dₙ].
- vernetzte Polymere: sind ketten- oder ringförmige Moleküle, die mit Hilfe von T- und Q-Einheiten zu zwei- oder dreidimensionalen Netzwerken verknüpft sind.

Vorzugsweise weisen die abhäsiven Beschichtungen zum sicheren Verankern eine Schichtdicke von 1 µm bis 200 µm auf, insbesondere von 1,5 µm bis 100 µm, besonders vorteilhafterweise von 2 µm bis 12 µm.

Die abhäsive Beschichtung kann direkt mittels eines Streichbalkens aus der Lösung, Emulsion oder Dispersion beschichtet werden. Das verwendete Löse-, Emulsions-, beziehungsweise Dispergiermittel wird in diesem Fall anschließend in einem handelsüblichen Trockenkanal verdampft. Ebenso ist eine lösungsmittelfreie Beschichtung mittels einer Düsen- oder Walzenbeschichtungsanlage geeignet.
Ferner kann die abhäsive Schicht auch gedruckt werden. Hier eignen sich nach dem Stand der Technik Tief- und Siebdruckverfahren. Bevorzugt werden hier rotative Druckverfahren.
Die Vernetzung kann sowohl thermisch erfolgen als auch durch physikalische Vorrichtungen. Ferner ist der Einsatz von chemischen Vernetzter bekannt. Ferner können abhäsive Beschichtungen durch Aufsprühen aufgebracht werden. Dieses kann auch im rotativen Sprühverfahren durchgeführt werden, gegebenenfalls auch elektrostatisch.

Bevorzugt weist der der Liner eine Gesamtdicke von weniger als 500 µm auf.
Weiter vorzugsweise ist der Liner nicht transparent und UV-Licht undurchlässig.

In einer weiteren vorteilhaften Ausführungsform der Erfindung weist der Liner einen mehrschichtigen Aufbau auf. Zwischen der Folienschicht, bestehend aus zumindest einer Kunststofffolie, sowie der Barriereschicht befindet sich ein metallischer Teil, der aus einer metallischen Schicht gebildet wird, wobei die Oberfläche der freien Seite der Folienschicht mit einer abhäsiven Beschichtung ausgerüstet ist.

Die metallische Schicht dient dabei als zusätzliche Barriere und hält Substanzen, die mit der Klebemasse reagieren könnten, zurück.
Beispiele für derartige Substanzen sind Wasser, Wasserdampf, Sauerstoff, Schwefeldioxid und Kohlendioxid.

Die Durchlässigkeit der metallischen Schicht ist dabei vorzugsweise auf die bereits oben genannten Werte beschränkt.

In einer vorteilhaften Ausführungsform der Erfindung weist die metallische Schicht eine Dicke von 10 nm bis 100 µm auf, insbesondere 15 bis 50 µm, ganz besonders 18 bis 25 µm.
Das Aufbringen der metallischen Schicht die Folienschicht oder auf die Barriereschicht geschieht beispielsweise durch Bedampfen, also indem ein Überzug auf der Kunststofffolie durch thermisches Verdampfen im Vakuum (elektrisch mit Elektronenstrahlen, durch Kathodenzerstäubung oder Drahtexplosion, gegebenenfalls mit Hilfe von Laser-Strahlen) erzeugt wird. Dann weist die metallische Schicht vorzugsweise eine Dicke von 10 nm bis 30 nm auf.
Die metallische Schicht kann auch aus einer gewalzten Metallfolie bestehen. Dann weist die metallische Schicht vorzugsweise eine Dicke von 5 µm bis 30 µm auf.
Als Metalle können gewählt werden Silber, Kupfer, Gold, Platin, Aluminium und Aluminiumverbindungen, Zinn, Nichrom, NIROSTA, Titan, Metalloxide wie Cadmiumoxide, Zinnoxide, Zinkoxide, Magnesiumoxide. Diese Aufzählung ist dabei als nicht abschließend zu betrachten, sondern der Fachmann kann weitere hier nicht explizit genannte Metallschichten wählen, ohne den Erfindungsgedanken zu verlassen.

Weitere vorteilhafte Ausführungsformen des Liners sind wie folgt aufgebaut.

Die Folienschicht ist eine Kunststofffolie aus Polyester, die metallische Schicht eine Aluminiumschicht und/oder die Barriereschicht eine Kunststofffolie aus Polyolefinen, bevorzugt Polypropylen oder Polyester.

Die Folienschicht ist eine Kunststofffolie aus Polyolefinen, bevorzugt Polypropylen, die metallische Schicht eine Aluminiumschicht und/oder die Barriereschicht eine Kunststofffolie aus Polyester.
Weiter bevorzugt ist die Polyesterfolie mit der metallischen Schicht versehen, indem diese darauf aufgedampft ist.

Weiter vorzugsweise werden die Folienschicht und/oder die Barriereschicht jeweils von einem Laminat aus Kunststofffolien gebildet, bevorzugt ein Laminat aus einer Polyesterfolie sowie aus einer Polyolefinfolie.
Die Kunststofffolien werden dabei mit Bindemitteln (Laminierharzen) wie Epoxid-, Melaminharzen, Thermoplasten usw. verklebt.
Bevorzugt werden 5 µm bis 80 µm dicke Polyesterfolien sowie 10 µm bis 250 µm dicke Polyolefinfolien.
Weiterhin können auch drei- oder mehrschichtige Laminate zum Einsatz kommen, ohne den Erfindungsgedanken zu verlassen.

In einer besonders bevorzugten Ausführungsform bestehen die Folienschicht und die Barriereschicht jeweils aus einem Laminat aus einer Polyesterfolie sowie aus einer Polyolefinfolie, bevorzugt Polypropylenfolie, und sind derart angeordnet, dass der Träger einen symmetrischen Aufbau um den bevorzugten Aluminium-Folienkern aufweist.
Der symmetrische Aufbau sorgt für eine erhöhte thermische Stabilität. Desgleichen wird die Planlage des Liners in der Verwendung deutlich verbessert.
Des Weiteren können auf der Folienschicht weitere Schichten angeordnet sein, gewählt aus der Gruppe Kunststofffolien, metallisierte Kunststofffolien, Metallfolien.

Beispielhaft seien weitere Aufbauten des Liners genannt, die sich als vorteilhaft erwiesen haben.
- Barriereschicht Polyesterfolie
- Folienschicht Polypropylenfolie
- metallische Schicht Aluminiumschicht, die auf die Polyesterfolie der Barriereschicht aufgebracht ist,
   wobei auf der Folienschicht folgende weitere Schichten in der angegebenen Reihenfolge aufgebracht sind:
- Polypropylenfolie
- Polyesterfolie mit aufgebrachter Aluminiumschicht, wobei die Aluminiumschicht derart angeordnet ist, dass diese an der Polypropylenfolie anliegt.
- Barriereschicht aus einer Polypropylen- und einer Polyesterfolie, wobei das Laminat derart angeordnet ist, dass die Klebemasse auf die Polypropylenfolie aufgebracht ist,
- Folienschicht Polyesterfolie
- metallische Schicht Aluminiumschicht, die auf die Polyesterfolie der Barriereschicht aufgebracht ist,
   wobei auf der Folienschicht folgende weitere Schichten in der angegebenen Reihenfolge aufgebracht sind:
- zweite Aluminiumschicht, die auf der Polyesterfolie der Folienschicht aufgebracht ist, zweite Polypropylenfolie, wobei die zweite Aluminiumschicht derart angeordnet ist, dass diese an der zweiten Polypropylenfolie anliegt

Femer lässt sich der Liner durch eine Vielzahl von Techniken veredeln. Beispielhaft sind Laminieren, Kaschieren, Imprägnieren, Oleophobieren, Hydrophobieren, Bestrahlen, Bedrucken, Färben, Schneiden, Stanzen oder Ritzen genannt.

Auf der freiliegenden Seite der Barriereschicht wird eine Klebemasse oder ein doppelseitig klebendes Klebband aufgebracht.

Das so entstandene Klebeband kann als endlose Rolle, die in Form einer archimedischen Spirale um zumeist eine Papp- oder Kunststöffhülse aufgewickelt ist, und oder als flächigräumlich begrenztes Gebilde dargeboten werden. Letzteres kann jede beliebige Gestalt aufweisen, dem jeweiligen Einsatzzweck hervorragend angepasst.

Aufgrund der Barrierewirkung der Barriereschicht erfolgt auf die Klebemasse, die beispielsweise auf Sauerstoff oder Wasserdampf reagieren würde, kein Angriff durch die geschilderten Substanzen. Damit kann die Klebemasse auch langfristig gelagert werden, ohne dass eine Änderung der Eigenschaften zu beobachten ist.

Die auf der freiliegenden Seite der Barriereschicht befindliche Klebemasse ist eine reaktive Klebmasse, die mit funktionellen Gruppen ausgestattet ist wie Acrylnitril-Gruppen oder freien Isocyanat-Gruppen.

Schließlich umfasst der Erfindungsgedanke auch ein Verfahren zum Aufbringen einer Klebemasse, wobei eine auf dem Liner befindliche Klebemasse, die Acrylnitril-Gruppen oder freie Isocyanat-Gruppen aufweist, vom Liner auf einen Untergrund übertragen wird, so dass die Klebemasse durch den Angriff von Sauerstoff oder Wasserdampf vollständig aushärtet.

Im Folgenden soll die Erfindung anhand von Beispielen näher beschrieben werden, ohne damit die Erfindung unnötig einschränken zu wollen.

### Beispiel A

Eine Trägerbahn (17 µm Polyester (PET)) als Barriereschicht wird mit einer Aluminiumschicht von 20 µm verklebt, auf die eine Polypropylenfolie von 80 µm aufgebracht wird. Das Laminat wird auf der Polyesterseite mit einer silikonhalitigen Emulsion beschichtet.

Die Emulsion enthält zwei Anteile styrolhaltigen Synthesekautschuk (Polysar 3083) und einen Anteil Silikonemulsion (Wacker 1571/E1572), basierend auf den Festköper der Anteile. Die Trocknung in einer Thermokanalanlage führt zum Entzug zum vollständigen Entzug des Wassers und zu einer ausreichenden Vernetzung. Es wird zur stärkeren Verankerung ein Haftvermittler eingesetzt. Nach 24 Stunden wird ein Liner mit einer abhäsiven Wirkung erhalten. Die Wasserdampfdichte ist kleiner 0,03 g/m²/24h.

### Beispiel B

Eine 82 µm Polypropylen-Folie, welche 1 Gew.-% Titandioxid enthält wird, mit einer Aluminiumschicht von 17 µm verbunden. Rückseitig wird eine Polyesterfolie mit 15 µm auf dieses Laminat verklebt. Beidseitig werden 3, g/m² (fest) silikonhaltige Verbindungen analog Beispiel A aufgebracht. Die Wasserdampfdichte ist kleiner 0,04 g/m²/24h.

## Patentansprüche

1. Verwendung eines Liners zum Schutz von empfindlichen Klebemassen, wobei der Liner aufweist einen Träger aus einer Folienschicht, die von zumindest einer Kunststofffolie aus insbesondere Polyester gebildet wird, sowie eine auf der Folienschicht aufgebrachte Barriereschicht, die eine Barrierewirkung gegen Sauerstoff und Wasserdampf sowie gegen andere Schadgase aufweist und die aus einer zumindest einer Kunststofffolie gebildet wird, gewählt aus der Gruppe PUR, PP, PET, PVC, PVDC, PEN, PAN, EVOH, PA, PA6 oder Insbesondere PA mit Nanokomposits, wobei die Barriereschicht aufwelst eine
• Durchlässigkeit von O₂ < 0,1 g/m²/24h, insbesondere < 0,01 glm²/24h, ganz insbesondere < 0,005 g/m²/24h
(gemessen bei 23°C und 50% relativer Feuchte)
• Durchlässigkeit von H₂O < 0,1 g/m²/24h, insbesondere < 0,01 g/m²/24h, ganz insbesondere < 0,005 g/m²/24h
(gemessen bei 37,8°C und 90% relativer Feuchte),
wobei auf der freiliegenden Seite der Barriereschicht eine Klebemasse oder ein doppelseitig klebendes Klebband aufgebracht ist und wobei die auf der freiliegenden Seite der Barriereschicht befindliche Klebemasse eine reaktive Klebmasse ist, die mit funktionellen Gruppen ausgestattet ist.

2. Verwendung eines Liners nach Anspruch 1,
**dadurch gekennzeichnet, dass**
die Oberfläche der Barriereschicht, die der Klebemasse zugewandt ist, mit einer abhäsiven Beschichtung ausgerüstet ist, bevorzugt basierend auf Silikon oder Fluor.

3. Verwendung eines Liners nach Anspruch 1 oder 2,
**dadurch gekennzeichnet, dass**
die Barriereschicht eine Dicke aufweist von 5 bis 160 µm.

4. Verwendung eines Liners nach zumindest einem der vorherigen Ansprüche,
**dadurch gekennzeichnet, dass**
die Oberfläche der freien Seite der Folienschicht mit einer abhäsiven Beschichtung ausgerüstet ist, bevorzugt basierend auf Silikon oder Fluor.

5. Verwendung eines Liners nach zumindest einem der vorherigen Ansprüche,
**dadurch gekennzeichnet, dass**
die abhäslve(n) Beschichtung(en) eine Dicke aufweisen von 1 µm bis 200 µm, insbesondere von 1,5 µm bis 100 µm, besonders vorteilhafterweise von 2 µm bis 12 µm.

6. Verwendung eines Liners nach zumindest einem der vorherigen Ansprüche,
**dadurch gekennzeichnet, dass**
sich zwischen der Folienschicht, bestehend aus zumindest einer Kunststofffolle, sowie der Barriereschicht ein metallischer Teil befindet, der aus einer metallischen Schicht gebildet wird, wobei die Oberfläche der freien Seite der Folienschicht mit einer abhäsiven Beschichtung ausgerüstet ist.

7. Verwendung eines Liners nach zumindest einem der vorherigen Ansprüche,
**dadurch gekennzeichnet, dass**
der Liner eine Gesamtdicke von weniger als 500 µm aufweist.

8. Verwendung eines Liners nach zumindest einem der vorherigen Ansprüche,
**dadurch gekennzeichnet, dass**
der Liner nicht transparent und UV-Licht undurchlässig ist.

9. Verwendung eines Liners zumindest einem der vorherigen Ansprüche, wobei die auf der freiliegenden Seite der Barriereschicht befindliche Klebemasse eine reaktive Klebmasse Ist, die mit Acrylnitril-Gruppen oder freien Isocyanat-Gruppen ausgestattet ist.

10. Verfahren zum Aufbringen einer Klebemasse, wobei eine auf dem Liner nach zumindest einem der vorherigen Ansprüche befindliche Klebemasse, die Acrylnitril-Gruppen oder freie Isocyanat-Gruppen aufweist, vom Liner auf einen Untergrund übertragen wird, so dass die Klebemasse durch den Angriff von Sauerstoff oder Wasserdampf vollständig aushärtet.

## Claims

1. Use of liner for protecting sensitive adhesives, the liner having a carrier comprising a film layer, which is formed by at least one polymeric film made from polyester in particular, and also having a barrier layer, which is applied to the film layer and which has a barrier effect with respect to oxygen and water vapour and also with respect to other harmful gases, and which is formed from at least one polymeric film, as selected from the group of PUR, PP, PET, PVC, PVDC, PEN, PAN, EVOH, PA, PA6 or, in particular, PA with nanocomposites, the barrier layer having a
• O₂ permeability < 0.1 g/m²/24 h, more particularly <0.01 g/m²/24 h, especially <0.005 g/m²/24 h (measured at 23°C and 50% relative humidity)
• H₂O permeability < 0.1 g/m²/24 h, more particularly <0.01 g/m²/24 h, especially <0.005 g/m²/24 h (measured at 37.8°C and 90% relative humidity),
there being an adhesive or a double-sided adhesive tape applied on the free-lying side of the barrier layer, the adhesive present on the free-lying side of the barrier layer being a reactive adhesive which is equipped with functional groups.

2. Use of a liner according to Claim 1, **characterized in that** the surface of the barrier layer that faces the adhesive is furnished with an abhesive coating, preferably based on silicone or fluorine.

3. Use of a liner according to Claim 1 or 2, **characterized in that** the barrier layer has a thickness of 5 to 160 µm.

4. Use of a liner according to at least one of the preceding claims, **characterized in that** the surface of the free side of the film layer is furnished with an abhesive coating, preferably based on silicone or fluorine.

5. Use of a liner according to at least one of the preceding claims, **characterized in that** the abhesive coating or coatings have a thickness of 1 µm to 200 µm, more particularly of 1.5 µm to 100 µm, very advantageously of 2 µm to 12 µm.

6. Use of a liner according to at least one of the preceding claims, **characterized in that** between the film layer, consisting of at least one polymeric film, and the barrier layer there is a metallic part which is formed from a metallic layer, the surface of the free side of the film layer being furnished with an abhesive coating.

7. Use of a liner according to at least one of the preceding claims, **characterized in that** the liner has a total thickness of less than 500 µm.

8. Use of a liner according to at least one of the preceding claims, **characterized in that** the liner is non-transparent and impervious to UV light.

9. Use of a liner according to at least one of the preceding claims, the adhesive present on the free-lying side of the barrier layer being a reactive adhesive which is equipped with acrylonitrile groups or free isocyanate groups.

10. Method for applying an adhesive, in which an adhesive which is present on the liner according to at least one of the preceding claims and which has acrylonitrile groups or free isocyanate groups is transferred from the liner to a substrate, so that the adhesive cures completely as a result of the attack of oxygen or water vapour.

## Revendications

1. Utilisation d'un revêtement pour la protection de masses adhésives sensibles, le revêtement comprenant un support en une couche en feuille, qui est formée à partir d'au moins une feuille en plastique, notamment en polyester, ainsi qu'une couche de barrière appliquée sur la couche en feuille, qui présente un effet de barrière contre l'oxygène et la vapeur d'eau, ainsi que contre d'autres gaz nocifs, et qui est formée à partir d'au moins une feuille en plastique, choisie dans le groupe constitué par PUR, PP, PET, PVC, PVDC, PEN, PAN, EVOH, PA, PA6 ou notamment PA avec des nanocomposites, la couche de barrière présentant
- une perméabilité à O₂ < 0,1 g/m²/24 h, notamment < 0,01 g/m²/24 h, tout particulièrement < 0,005 g/m²/24 h (mesurée à 23 °C et 50 % d'humidité relative),
- une perméabilité à H₂O < 0,1 g/m²/24 h, notamment < 0,01 g/m²/24 h, tout particulièrement < 0,005 g/m²/24 h (mesurée à 37,8 °C et 90 % d'humidité relative),
une masse adhésive ou une bande adhésive double face étant appliquée sur le côté exposé de la couche de barrière et la masse adhésive qui se trouve sur le côté exposé de la couche de barrière étant une masse adhésive réactive qui est munie de groupes fonctionnels.

2. Utilisation d'un revêtement selon la revendication 1, **caractérisée en ce que** la surface de la couche de barrière qui est orientée vers la masse adhésive est équipée d'un enduit adhésif, de préférence à base de silicone ou de fluor.

3. Utilisation d'un revêtement selon la revendication 1 ou 2, **caractérisée en ce que** la couche de barrière présente une épaisseur de 5 à 160 µm.

4. Utilisation d'un revêtement selon au moins l'une quelconque des revendications précédentes, **caractérisée en ce que** la surface du côté exposé de la couche en feuille est munie d'un enduit adhésif, de préférence à base de silicone ou de fluor.

5. Utilisation d'un revêtement selon au moins l'une quelconque des revendications précédentes, **caractérisée en ce que** le ou les enduits adhésifs présentent une épaisseur de 1 µm à 200 µm, notamment de 1,5 µm à 100 µm, de manière particulièrement avantageuse de 2 µm à 12 µm.

6. Utilisation d'un revêtement selon au moins l'une quelconque des revendications précédentes, **caractérisée en ce qu'**une partie métallique formée à partir d'une couche métallique se trouve entre la couche en feuille constituée d'au moins une feuille en plastique et la couche de barrière, la surface du côté exposé de la couche en feuille étant munie d'un enduit adhésif.

7. Utilisation d'un revêtement selon au moins l'une quelconque des revendications précédentes, **caractérisée en ce que** le revêtement présente une épaisseur totale de moins de 500 µm.

8. Utilisation d'un revêtement selon au moins l'une quelconque des revendications précédentes, **caractérisée en ce que** le revêtement n'est pas transparent et est imperméable à la lumière UV.

9. Utilisation d'un revêtement selon au moins l'une quelconque des revendications précédentes, dans laquelle la masse adhésive qui se trouve sur le côté exposé de la couche de barrière est une masse adhésive réactive qui est munie de groupes acrylonitrile ou de groupes isocyanate libres.

10. Procédé d'application d'une masse adhésive, selon lequel une masse adhésive qui se trouve sur le revêtement selon au moins l'une quelconque des revendications précédentes, qui comprend des groupes acrylonitrile ou des groupes isocyanate libres, est transférée du revêtement sur un substrat, de sorte que la masse adhésive durcisse en totalité sous l'effet de l'oxygène ou de la vapeur l'eau.
